(19)

Europäisches
Patentamt
European
Patent Office
Office européen
des brevets

(11) **EP 3 179 390 A1**

(12) **EUROPEAN PATENT APPLICATION**

(43) Date of publication:
**14.06.2017 Bulletin 2017/24**

(51) Int Cl.:
**G06F 17/50** $^{(2006.01)}$ **G06T 13/60** $^{(2011.01)}$

(21) Application number: **16202849.2**

(22) Date of filing: **08.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.12.2015 KR 20150173968**

(71) Applicant: **Samsung Electronics Co., Ltd.
Gyeonggi-do 16677 (KR)**

(72) Inventors:
• **SAGONG, Donghoon
16678 Gyeonggi-do (KR)**

• **KANG, Nahyup
16678 Gyeonggi-do (KR)**
• **KIM, Jiyeon
16678 Gyeonggi-do (KR)**
• **LEE, Hyong Euk
16678 Gyeonggi-do (KR)**
• **JUNG, Hwiryong
16678 Gyeonggi-do (KR)**

(74) Representative: **Grootscholten, Johannes A.M. et al
Arnold & Siedsma
Bezuidenhoutseweg 57
2594 AC The Hague (NL)**

(54) **METHOD AND APPARATUS FOR MODELING MOVEMENT OF AIR BUBBLE BASED ON FLUID PARTICLES**

(57) A fluid particle modeling method includes determining bubble cells based on locations of fluid particles, defining a bubble based on the bubble cells, calculating a pressure of the bubble based on a change in a volume of the bubble, and updating the locations of the fluid particles based on the pressure of the bubble.

## FIG. 4

**Description**

BACKGROUND

1. Field

The following description relates to a method and an apparatus for modeling a movement of an air bubble based on fluid particles.

2. Description of Related Art

In a computer graphics (CG) field, for example, a visual effects (VFX) field, air particles may be used to model an air bubble in a fluid flow.

For modeling an air bubble in a fluid using air particles, a space corresponding to a volume of the air bubble needs to be filled with air particles. Thus, numerous air particles need to be processed to model a large-sized air bubble, and also determining an initial seeding location and a removal location of the air particles may not be easy.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a fluid particle modeling method includes determining bubble cells based on locations of fluid particles; defining a bubble constituted by the bubble cells; calculating a pressure of the bubble based on a change in a volume of the bubble; and updating the locations of the fluid particles based on the pressure of the bubble.

The determining of the bubble cells may include determining grid cells not including any of the fluid particles among grid cells in a grid cell-based modeling space to be the bubble cells.

The defining of the bubble may include determining the bubble based on a connection relationship among the bubble cells; and assigning an identifier (ID) to the bubble.

The determining of the bubble may include determining the connection relationship among the bubble cells using a flood-fill labeling algorithm; and determining connected bubble cells among the bubble cells to be the bubble.

The method may further include determining an initial volume and an initial pressure of the bubble based on information of a fluid cell adjacent to a location of the bubble; and the fluid cell may include some of the fluid particles.

The calculating of the pressure of the bubble may include calculating the pressure of the bubble based on a previous volume of the bubble and a current volume of the bubble.

The calculating of the pressure of the bubble may include calculating a pressure of the bubble effective to prevent the bubble from disappearing using a gas state equation.

The method may further include determining whether a structural change of the bubble has occurred by performing ID matching in different modeling time steps; and assigning a new ID to one or more bubbles resulting from the structural change in response to a result of the determining being that the structural change has occurred.

The determining of whether the structural change of the bubble has occurred may include performing the ID matching in the different modeling time steps using a best overlapping algorithm.

The structural change of the bubble may be either one of the bubble splitting into a plurality of bubbles and the bubble merging with another bubble.

The updating of the locations of the fluid particles may include modeling the fluid particles using a smoothed-particle hydrodynamics (SPH) algorithm.

The updating of the locations of the fluid particles may include applying the pressure of the bubble as an external force to fluid particles adjacent to the bubble among the fluid particles; and determining updated locations of the fluid particles based on the external force applied to the fluid particles adjacent to the bubble.

The calculating of the pressure of the bubble may include rearranging a pressure distribution in the bubble to model a buoyancy of the bubble.

The rearranging of the pressure distribution in the bubble may include gradually changing the pressure distribution in the bubble based on locations of the bubble cells constituting the bubble.

The rearranging of the pressure distribution in the bubble may include increasing pressures of bubble cells at higher locations in the bubble among the bubble cells constituting the bubble; and decreasing pressures of bubble cells at lower locations in the bubble among the bubble cells constituting the bubble.

In another general aspect, a non-transitory computer-readable storage medium stores instructions that, when executed by a processor, cause the processor to perform the method described above.

In another general aspect, a fluid particle modeling apparatus includes a processor configured to determine bubble cells based on locations of fluid particles, define a bubble constituted by the bubble cells; calculate a pressure of the bubble based on a change in a volume of the bubble, and update the locations of the fluid particles based on the pressure of the bubble; and a memory configured to store information of fluid cells including the fluid particles and information of the bubble cells constituting the bubble in a grid cell-based modeling space.

The processor may be further configured to determine grid cells not including any of the fluid particles among grid cells in the grid cell-based modeling space to be the bubble cells.

The processor may be further configured to determine the bubble based on a connection relationship among the bubble cells, and assign an identifier (ID) to the bubble.

The processor may be further configured to determine an initial volume of the bubble and an initial pressure of the bubble based on information of a fluid cell adjacent to a location of the bubble; and the fluid cell may include some of the fluid particles.

The processor may be further configured to calculate the pressure of the bubble based on a previous volume of the bubble and a current volume of the bubble.

The processor may be further configured to calculate a pressure of the bubble effective to prevent the bubble from disappearing using a gas state equation.

The processor may be further configured to determine whether a structural change of the bubble has occurred by performing ID matching in different modeling time steps, and assign a new ID to one or more bubbles resulting from the structural change in response to a result of the determining being that the structural change has occurred.

The structural change of the bubble may be either one of the bubble splitting into a plurality of bubbles and the bubble merging with another bubble.

The processor may be further configured to update the locations of the fluid particles by modeling the fluid particles using a smoothed-particle hydrodynamics (SPH) algorithm.

The processor may be further configured to apply the pressure of the bubble as an external force to fluid particles adjacent to the bubble among the fluid particles, and determine updated locations of the fluid particles based on the external force applied to the fluid particles adjacent to the bubble.

The processor may be further configured to rearrange a pressure distribution in the bubble to model a buoyancy of the bubble.

The processor may be further configured to gradually change the pressure distribution in the bubble based on locations of the bubble cells constituting the bubble.

The processor may be further configured to increase pressures of bubble cells at higher locations in the bubble among the bubble cells constituting the bubble, and decrease pressures of bubble cells at lower locations in the bubble among the bubble cells constituting the bubble.

In another general aspect, a fluid modeling method includes modeling a fluid by fluid particles using a particle modeling method; modeling a bubble in the fluid using a non-particle modeling method; tracking a volume of the bubble as time elapses in a modeling process; calculating a current pressure of the bubble based on a current volume of the bubble; and applying the current pressure of the bubble to fluid particles adjacent to the bubble among the fluid particles.

The particle modeling method may include modeling the fluid particles in grid cells in a grid cell-based modeling space; and the non-particle modeling method may include modeling the bubble by contiguous grid cells not including any of the fluid particles in the grid cell-based modeling space;

The tracking of the bubble may include defining the bubble to be contiguous grid cells not including any of the fluid particles in a grid cell-based modeling space at a beginning of the modeling process; assigning a same identifier (ID) to the contiguous grid cells at the beginning of the modeling process; determining the volume of the bubble at the beginning of the modeling process to be a sum of volumes of the contiguous grid cells having the ID; identifying contiguous grid cells having the ID after time has elapsed in the modeling process; and determining the volume of the bubble after the time has elapsed to be a sum of volumes of the identified contiguous grid cells having the ID.

The method may further include determining an initial volume of the bubble at a beginning of a modeling process; and determining an initial pressure of the bubble at the beginning of the modeling process; and the calculating of the current pressure of the bubble may include calculating the current pressure of the bubble based on the current volume of the bubble, the initial volume of the bubble, and the initial pressure of the bubble.

The determining of the initial volume of the bubble may include determining the initial volume of the bubble to be a sum of volumes of contiguous grid cells not including any of the fluid particles in a grid-cell based modeling space at the beginning of the modeling process; and the determining of the initial pressure of the bubble may include determining the initial pressure of the bubble to be a pressure of the fluid particles adjacent to the bubble at the beginning of the modeling process.

The method may further include determining the pressure of the fluid particles adjacent to the bubble at the beginning of the modeling process to be an average of individual pressures of the fluid particles adjacent to the bubble at the beginning of the modeling process.

The calculating of the current pressure of the bubble may include calculating the current pressure of the bubble according to the following equation:

$$P_2 = \frac{P_1 V_1}{V_2}$$

In the above equation, $P_2$ denotes the current pressure of the bubble, $P_1$ denotes the initial pressure of the bubble, $V_1$ denotes the initial volume of the bubble, and $V_2$ denotes the current volume of the bubble.

The applying of the current pressure of the bubble to the fluid particles adjacent to the bubble may include applying the current pressure of the bubble to grid cells comprising the fluid particles in a grid cell-based modeling space.

Other features and aspects will be apparent from the following detailed description, the drawings, and the claims.

BRIEF DESCRIPTION OF THE DRAWINGS

FIGS. 1A and 1B are diagrams illustrating examples of generating a bubble.

FIG. 2 is a flowchart illustrating an example of a fluid particle modeling method.

FIG. 3 is a flowchart illustrating an example of a process of defining a bubble.

FIG. 4 is a diagram illustrating an example of a defined bubble.

FIG. 5 is a flowchart illustrating an example of a process of calculating a pressure of a bubble.

FIG. 6 is a diagram illustrating an example of calculating a pressure of a bubble effective to prevent the bubble from disappearing.

FIG. 7 is a diagram illustrating another example of a fluid particle modeling method.

FIG. 8 is a diagram illustrating an example of a process of updating locations of fluid particles.

FIGS. 9A and 9B are diagrams illustrating examples of assigning a new identifier (ID) based on a structural change of a bubble.

FIG. 10 is a flowchart illustrating another example of a fluid particle modeling method.

FIG. 11 is a flowchart illustrating another example of a fluid particle modeling method.

FIGS. 12A and 12B are diagrams illustrating an example of a process of rearranging a pressure distribution in a bubble to model a buoyancy of the bubble.

FIG. 13 is a diagram illustrating an example of a fluid particle modeling apparatus.

Throughout the drawings and the detailed description, the same drawing reference numerals refer to the same elements. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art. The sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

Terms such as first, second, A, B, (a), and (b) may be used herein to describe components. These terms are not used to define a nature, an order, or a sequence of a corresponding component, but are used merely to distinguish the corresponding component from one or more other components. For example, a first component may alternatively be referred to a second component, and a second component may alternatively be referred to as a first component.

If the specification states that one component is "connected," "coupled," or "joined" to another component, a third component may be "connected," "coupled," and "joined" between the first and second components, or the first component may be directly connected, coupled, or joined to the second component. If the specification states that one component is "directly connected" or "directly joined" to another component, a third component may not be "connected," "coupled," and "joined" between the first and second components. Similar expressions, such as "between" and "immediately between" and "adjacent to" and "immediately adjacent to," are to be construed in this same manner.

The terminology used herein is for the purpose of describing particular examples only, and is not used to limit the disclosure. The terms "a," "an," and "the" are intended to include the plural forms as well, unless the context clearly indicates otherwise. As used herein, the terms "comprises," "comprising," "includes," including," "has," and "having" specify the presence of stated features, numbers, operations, elements, components, and/or combinations thereof, but do not preclude the presence or addition of one or more other features, numbers, operations, elements, components, and/or combinations thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Examples described hereinafter may be used to model a fluid and a bubble included in the fluid. The examples may be embodied in various devices, such as, for example, a personal computer (PC), a laptop computer, a tablet computer, a smartphone, a television (TV), a smart home appliance, and a wearable device. The examples may be used for image processing to model a fluid including a bubble in, for example, a smartphone, a mobile device, and a smart home system. The examples may be similarly used in, for example, a game console or machine, a virtual reality player, and a three-dimensional (3D) modeling apparatus.

In the examples, a modeling apparatus may be embodied as a hardware module. For example, the modeling apparatus may be embodied as a single processor system, a multi-processor system, a dedicated hardware system, a system in which a processor and a hardware accelerator (HWA) are combined, and a cloud computing system.

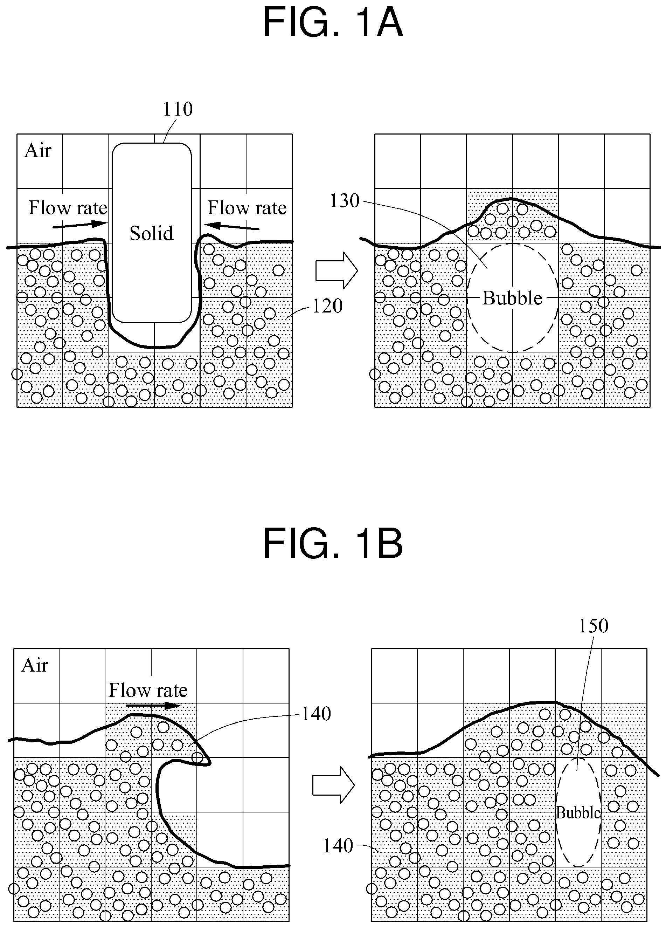

FIGS. 1A and 1B are diagrams illustrating examples of generating a bubble. In the examples of FIGS. 1A and 1B, small circles included in a fluid, for example, a fluid 120 of FIG. 1A and a fluid 140 of FIG. 1B, indicate fluid particles included in the fluid.

Referring to FIG. 1A, a bubble is generated through an interaction between a solid 110 and the fluid 120. For example, when a portion of the solid 110 is submerged in the fluid 120 and is then ejected by a rapid movement of the fluid 120 or a high flow rate of the fluid 120, a space in the fluid 120 that was previously occupied by the solid 110 is filled with air, and a surface of the fluid 120 closes up due to the high flow rate of the fluid 120. In the space previously occupied by the solid 110, a bubble is generated by the air that fills the space.

Referring to FIG. 1B, a bubble is generated by a collision between surfaces of the fluid 140. For example, when a wave rises in a sea, portions of the fluid 140 may move at different flow rates and different heights due to a wind. A surface of a portion of the fluid 140, for example, a surging portion that moves at a high flow rate in a high location, may collide with a surface of a portion of the fluid 140 that moves at a low flow rate in a low location. At the time of the collision, air may be caught by the surging portion that moves at the high flow rate. A bubble may be generated by the air caught by the surging portion.

Although not illustrated, a bubble may be generated, for example, when water is poured into a cup by slightly tipping a bottle of water and air outside the bottle flows into the bottle while the water flows out of the bottle.

In the examples described above, a bubble may be generated in a fluid or disappear from a fluid, and the bubble may change in size.

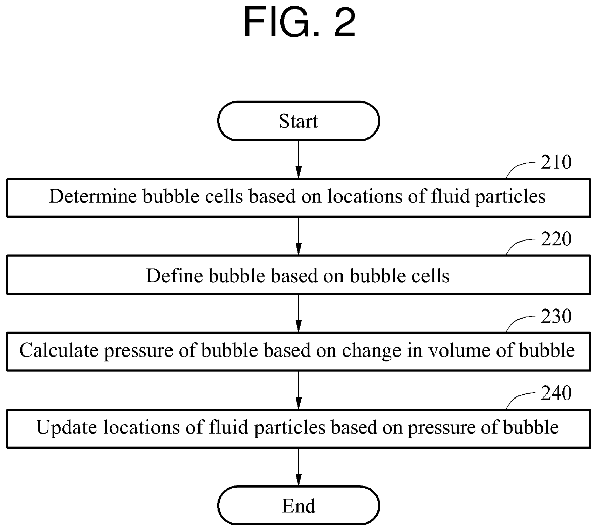

FIG. 2 is a flowchart illustrating an example of a fluid particle modeling method. The fluid particle modeling method may be performed by a fluid particle modeling apparatus, hereinafter simply referred to as a modeling apparatus. Referring to FIG. 2, in operation 210, the modeling apparatus determines bubble cells based on locations of fluid particles. The fluid particles may be particles included in a fluid modeled by a particle-based smoothed-particle hydrodynamics (SPH) algorithm. Alternatively, the fluid particles may be modeled by a voxel-based Fluid-Implicit-Particle (FLIP) algorithm.

In a grid cell-based modeling space, a grid cell including fluid particles is determined to be a fluid cell. The modeling apparatus determines grid cells in the grid cell-based modeling space that do not include fluid particles to be bubble cells.

For example, in a two-dimensional (2D) grid cell-based modeling space, four fluid particles may be included in a single grid cell. In a 3D grid cell-based modeling space, eight fluid particles may be included in a single grid cell. However, these are merely examples, and more or fewer particles may be included in a single grid cell.

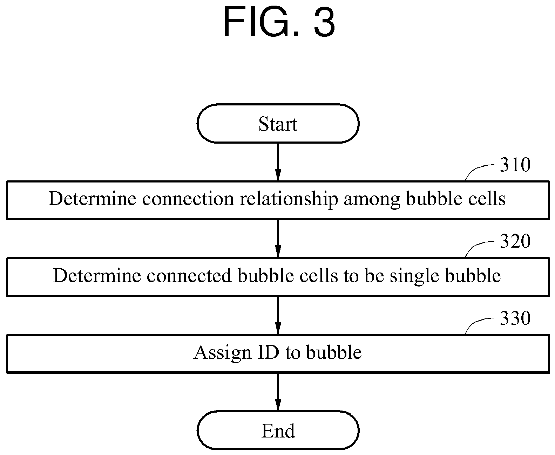

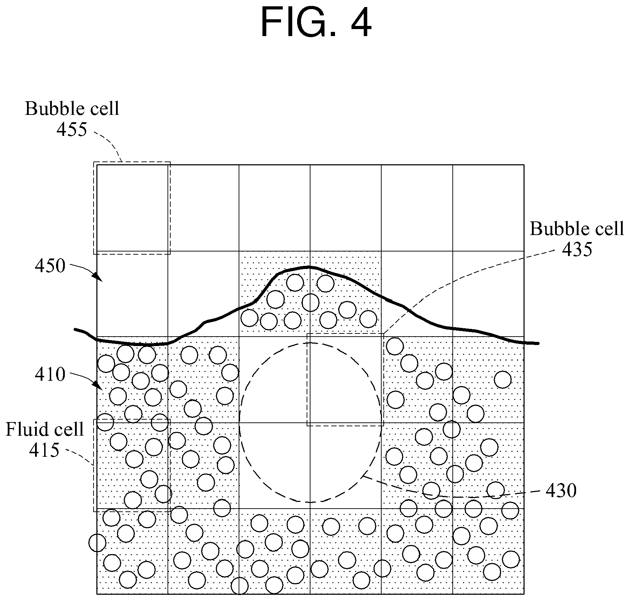

In operation 220, the modeling apparatus defines a bubble based on the bubble cells. The modeling apparatus determines the bubble based on a connection relationship among the bubble cells, and assigns an identifier (ID) to the bubble. A detailed process of defining an air bubble by the modeling apparatus and an example of the defined air bubble will be described with reference to FIGS. 3 and 4.

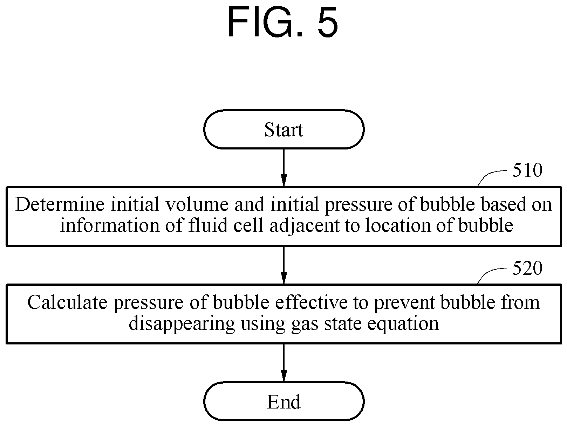

In operation 230, the modeling apparatus calculates a pressure of the bubble based on a change in a volume of the bubble. The modeling apparatus calculates the pressure of the bubble based on a previous volume of the bubble and a current volume of the bubble based on a lapse of time, for example, a modeling time step. A detailed process of calculating a pressure of a bubble by the modeling apparatus will be described with reference to FIG. 5.

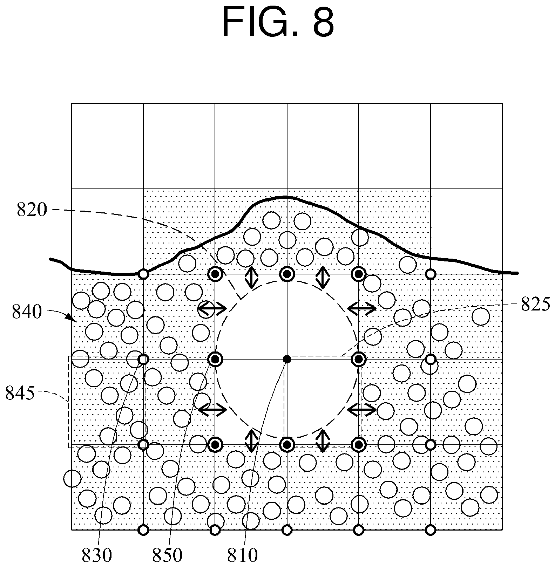

In operation 240, the modeling apparatus updates the locations of the fluid particles based on the pressure of the bubble. The modeling apparatus determines updated locations of the fluid particles by applying the pressure of the bubble as an external force to fluid particles adjacent to the bubble. A detailed process of updating locations of fluid particles by the modeling apparatus will be described with reference to FIG. 8.

FIG. 3 is a flowchart illustrating an example of a process of defining a bubble. Referring to FIG. 3, in operation 310, a modeling apparatus determines a connection relationship among bubble cells. The modeling apparatus may determine the connection relationship among the bubble cells using, for example, a flood-fill labeling algorithm. The flood-fill labeling algorithm is an algorithm for determining an assigned location and a connected portion in a multidimensional arrangement and performing labeling. The flood-fill labeling algorithm may use three parameters, for example, a start node, a target color, and an alternative color. The flood-fill labeling algorithm determines the assigned location, for example, a bubble cell, and the connected portion, for example, another bubble cell, by changing the target color to the alternative color along all nodes connected to the start node. The connection relationship among the bubble cells may be stored using a data structure, for example, a stack and a queue.

In operation 320, the modeling apparatus determines connected bubble cells among the bubble cells to be a single bubble.

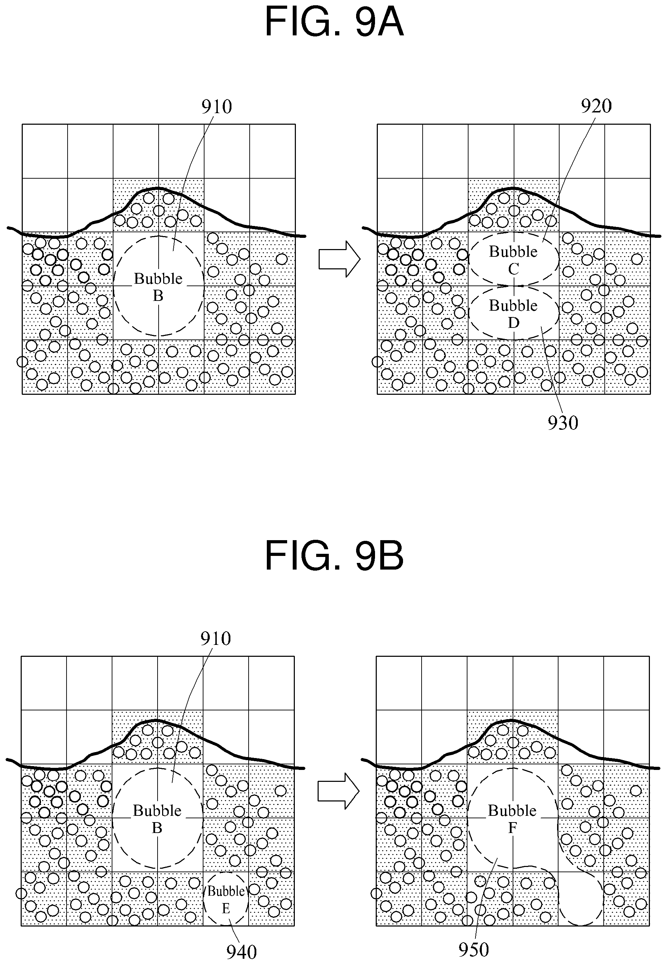

In operation 330, the modeling apparatus assigns an ID to the bubble. The ID assigned to the bubble is used to track a movement of the bubble and a change in a volume of the bubble. When a structural change occurs, for example, when the bubble is split into a plurality of bubbles by a movement of fluid particles or a collision with an object around the bubble, or the bubble is merged with another bubble, the modeling apparatus assigns a new ID to the bubble undergoing the structural change. A detailed process of assigning a new ID to a bubble based on a structural change will be described with reference to FIGS. 9A and 9B.

FIG. 4 is a diagram illustrating an example of a defined bubble.

A modeling apparatus models an interaction between a fluid and a bubble, for example, an interaction occurring when bubbles are generated in a fluid, for example, water, and a single bubble is split into smaller bubbles or bubbles are merged into a single larger bubble.

Referring to FIG. 4, the modeling apparatus models fluid particles based on an SPH algorithm to model a movement of a fluid 410 including a bubble 430.

The modeling apparatus models the bubble 430 using grid cells, instead of filling a volume of the bubble 430 in the fluid 410 with air particles.

After dividing a modeling space 450 into grid spaces including grid cells, the modeling apparatus determines grid cells including fluid particles to be fluid cells, for example, a fluid cell 415, and determines grid cells not including a fluid particle to be bubble cells, for example, a bubble cell 435 and a bubble cell 455. The bubble cells may be classified into a bubble cell modeling an air region outside the fluid 410, for example, the bubble cell 455, and a bubble cell modeling an air region inside the fluid 410, for example, the bubble cell 435. The example of FIG. 4 will be described based mainly on the bubble cell modeling the air region included in the fluid 410, for example, the bubble cell 435.

Since locations of fluid particles are determined in a process of modeling the fluid particles through the SPH algorithm, the modeling apparatus determines locations of fluid particles in a grid and a location of the bubble 430.

Each bubble cell is classified into a group based on a connection relationship with neighboring bubble cells. A single group into which connected bubble cells are classified is determined to be a single bubble, for example, the bubble 430. The bubble cells in the single group of connected bubble cells are contiguous bubble cells in the grid cell-based modeling space. A volume of the bubble 430 is assumed to be equal to a volume of the single group of bubble cells. For example, in a case of a modeling space including rectangular parallelepiped grid cells, a volume of a single bubble, for example, the volume of the bubble 430, is approximated by a sum of volumes of rectangular parallelepiped grid cells of a corresponding group of bubble cells.

The modeling apparatus assigns an ID to each bubble, and maintains the assigned ID for a duration during which a modeling time step increases. A bubble is constituted by a group of connected bubble cells, and the connected bubble cells in the same group have a same ID. In a progress of modeling, an ID of a bubble in a current modeling time step matches an ID of the bubble in a previous modeling time step.

The modeling apparatus may configure grid cells based on a size of a bubble to be modeled, and determine or update whether each grid cell corresponds to a fluid or a gas.

In one example, the modeling apparatus minimizes calculations for processing particles by modeling a bubble included in a fluid using grid cells, instead of filling the bubble with particles such as air particles. In addition, the modeling apparatus does not need to calculate an initial seeding location and a removal location of air particles by modeling the bubble using bubble cells.

FIG. 5 is a flowchart illustrating an example of a process of calculating a pressure of a bubble. Referring to FIG. 5, in operation 510, a modeling apparatus determines an initial volume and an initial pressure of a bubble based on information of a fluid cell adjacent to a location of the bubble. The information of the fluid cell may include, for example, a location, a movement amount, a moving speed, a density, and a volume of fluid particles included in the fluid cell.

In a grid cell-based modeling space, the information of the fluid cell may be separately stored for each fluid cell, or stored at a grid point of the fluid cell. Alternatively, the information of the fluid cell may be stored for each fluid particle, or stored for a representative particle of the fluid particles.

For example, the modeling apparatus may determine the initial volume and the initial pressure of the bubble to be a volume and a pressure stored in the fluid cell adjacent to the location of the bubble. In the grid cell-based modeling space, a same physical quantity may be applied, among neighboring grid cells, to a direction of an action and also to an opposite direction based on the principle of action and reaction.

In addition, the modeling apparatus may model the fluid particles so that a volume or a density of each fluid particle included in the fluid cell satisfies a condition of volume preservation, and determine a mean value, for example, a representative value, of volumes and pressures of the fluid particles included in the fluid cell adjacent to the location of the bubble to be the initial volume and the initial pressure of the bubble.

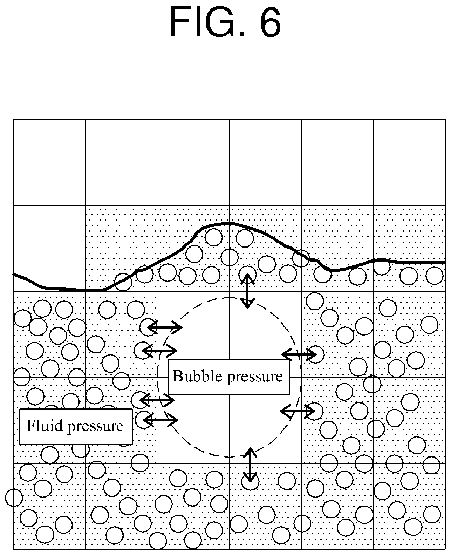

In operation 520, the modeling apparatus calculates a pressure of the bubble effective to prevent the bubble from disappearing using a gas state equation. The modeling apparatus calculates the pressure of the bubble based on a previous volume, for example, the initial volume, of the bubble and a current volume of the bubble. A detailed process of calculating a pressure of a bubble effective to prevent the bubble from disappearing will be described with reference to FIG. 6.

FIG. 6 is a diagram illustrating an example of calculating a pressure of a bubble effective to prevent the bubble from disappearing.

A gas state equation expresses a correlation between a pressure and a volume of a gas, for example, a bubble, as represented by Equation 1 below.

$$PV = nRT \qquad (1)$$

In Equation 1, $P$ and $V$ denote a pressure and a volume of a gas, for example, a bubble, respectively, $n$ denotes the number of moles of the gas, and $R$ and $T$ denote a gas constant and a temperature of the gas, respectively.

Assuming that the temperature of the bubble does not change during the modeling, the right side of Equation 1, $nRT$, may be replaced by a constant $k$. Thus, Equation 1 may be rewritten as $PV = k$. When a value of $k$ is given, the pressure $P$ of the gas may be obtained using the volume V of the gas according to Equation 2 below.

$$P = k/V \qquad (2)$$

Through the operations described in the foregoing, a modeling apparatus calculates an initial volume of a bubble and tracks an ID of the bubble to calculate a change in a volume of the bubble over time. The modeling apparatus determines the change in the volume of the bubble, and also a change in a pressure of the bubble.

A volume of a single bubble is approximated by a sum of volumes of grid cells in a corresponding group of bubble cells. The grid cells in the corresponding group of bubble cells are contiguous cells in the grid cell-based modeling space. Thus, when volumes of bubble cells having a same ID change, the modeling apparatus calculates a pressure of a bubble effective to prevent the bubble from disappearing using a gas state equation.

Applying a pressure of the bubble to adjacent fluid particles prevents the bubble from unnaturally decreasing in size or disappearing due to a movement of fluid particles. When a volume of the bubble gradually decreases over time, the modeling apparatus pushes against the adjacent fluid particles by gradually increasing the pressure of the bubble to prevent the bubble from disappearing. For example, the modeling apparatus applies, as an external force, the pressure of the bubble effective to prevent the bubble from disappearing to the fluid particles adjacent to the bubble to prevent the bubble surrounded by the fluid particles from disappearing.

In the example described above, instead of using air particles to model a bubble, an air pressure of the bubble is used to perform the same function as the air particles. Thus, the modeling apparatus is able to model the bubble while eliminating a scene dependency an increase in an amount of particle calculations that occur when the bubble is modeled using air particles.

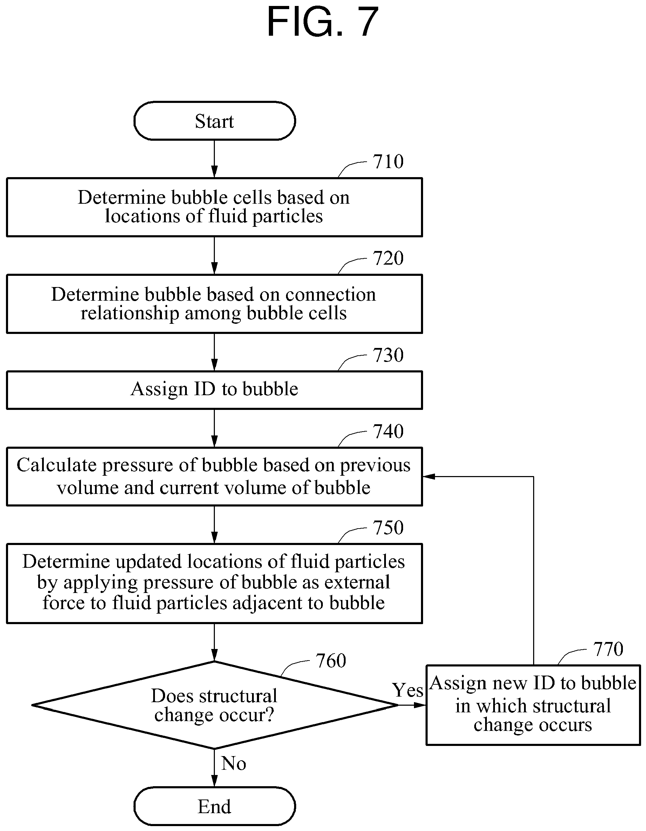

FIG. 7 is a diagram illustrating another example of a fluid particle modeling method. Referring to FIG. 7, in operation 710, a modeling apparatus determines bubble cells based on locations of fluid particles.

In operation 720, the modeling apparatus determines a bubble based on a connection relationship among the bubble cells.

In operation 730, the modeling apparatus assigns an ID to the bubble.

In operation 740, the modeling apparatus calculates a pressure of the bubble based on a previous volume of the bubble and a current volume of the bubble.

In operation 750, the modeling apparatus determines updated locations of the fluid particles by applying the pressure of the bubble as an external force to fluid particles adjacent to the bubble. A detailed process of determining updated locations of fluid particles will be described with reference to FIG. 8.

In operation 760, the modeling apparatus determines whether a structural change of the bubble occurs. Structural changes of the bubble include the bubble splitting into a plurality of bubbles and the bubble merging with another bubble.

In one example, the modeling apparatus determines whether the structural change of the bubble occurs through ID matching in different modeling time steps. For example, the modeling apparatus determines whether an ID of a bubble corresponding to a location in a first modeling time step matches an ID of the bubble corresponding to the location in a second modeling time step using a best overlapping algorithm. The modeling apparatus determines whether the structural change of the bubble occurs by determining whether a bubble corresponding to an ID satisfies an original location of the bubble using the best overlapping algorithm, and by determining whether the bubble overlaps the bubble corresponding to the original location.

An example of the best overlapping algorithm is shown in Table 1 below.

Table 1

```
Assumption: bubble cell regions are determined at a time t-1 and a time t, and an ID is assigned
 to each bubble cell region
        e.g., bubble cell regions at the time t-1: r1_t-1,r2_t-1, ... , rk_t-1, ... rn_t-1
           bubble cell regions at the time t: r1_t, r2_t, ... , rk_t, ... rn_t
 Input: an ID of a certain bubble cell region at the time t-1 (e.g., rk_t-1)
 Output: an ID of a bubble cell region at the time t (e.g., rk_t)
that best overlaps the input bubble
 cell region rk_t-1 among all of the bubble cell regions at the
time t, i.e., that overlaps a greater
 portion of the input bubble cell region at the time t than any other
one of the bubble cell regions at
 the time t
 Step 1: generate a mask array MASK[c] for the input bubble cell
region rk_t-1 at the time t-1, the
 mask array MASK[c] having cells c corresponding to the grid cells
in the grid-cell based
 modeling space
        in the mask array MASK[c], cells c belonging to rk_t-1 are
filled with 1, and cells c not
 belonging to rk_t-1 are filled with 0
        if c is in rk_t-1, then MASK[c] = 1
        else MASK[c] = 0
 Step 2: discover a best overlapping region by examining all of the
bubble cell regions at the time
 t
        determine, to be the best overlapping bubble cell region,
a bubble cell region having a
 greatest sum of mask values of cells
        best_overlap_cnt = 0
        best_overlap_ID = -1
        for each bubble cell region rk_t at time t
              cnt = 0
              for each cell c in rk_t
                    cnt = cnt + MASK[c]
              end
              if cnt > best_overlap_cnt
                    best_overlap_cnt = cnt
                    best_overlap_ID = rk_t
              end
        end
 Step 3: return the best overlap ID
        return best_overlap_ID
```

When it is determined in operation 760 that the structural change does not occur, the modeling apparatus terminates the process in FIG. 7.

In operation 770, when it is determined in operation 760 that the structural change occurs, the modeling apparatus assigns a new ID to the bubble undergoing the structural change. A detailed process of assigning a new ID to a bubble in which a structural change occurs will be described with reference to FIGS. 9A and 9B. Subsequently, the modeling apparatus tracks the bubble to which the new ID is assigned, and calculates a pressure of the bubble based on a previous volume and a current volume of the bubble in operation 740.

FIG. 8 is a diagram illustrating an example of a process of updating locations of fluid particles. In the example of FIG. 8, grid points of fluid cells and bubble cells in a grid cell-based modeling space are illustrated.

Referring to FIG. 8, a grid point 810 includes information of bubble cells, for example, a bubble cell 825, adjacent to the grid point 810, and a grid point 830 includes information of fluid cells, for example, a fluid cell 845, adjacent to the grid point 830. A grid point 850 includes the information of the bubble cells, for example, the bubble cell 825, and the information of the fluid cells, for example, the fluid cell 845.

Information of a fluid cell may include a location, a movement amount, a moving speed, a density, and a volume of fluid particles included in the fluid cell.

In the grid cell-based modeling space, the information of the fluid cell may be stored in a form of a representative value or a mean value of grid points of a grid cell, stored for each fluid particle, or stored for a representative particle among the fluid particles.

A modeling apparatus determines a volume and a pressure of fluid cells adjacent to a location of a bubble 820 to be an initial volume $V_1$ and an initial pressure $P_1$ of the bubble 820. In the grid cell-based modeling space, a same physical quantity acts in opposite directions among neighboring grid cells, and thus a balance may be obtained among the neighboring grid cells.

The modeling apparatus calculates a changed pressure $P_2$ of the bubble 820 based on a previous $V_1$ of the bubble 820 and a current volume $V_2$ of the bubble 820. Since $PV = k$, where $k$ is a constant equal to $nRT$, as described above in connection with Equation 1, $P_1V_1 = P_2V_2$, and accordingly $P_2$ may be calculated according to Equation 3 below.

$$ P_2 = \frac{P_1 V_1}{V_2} \tag{3} $$

The modeling apparatus applies the calculated pressure $P_2$ of the bubble 820 as a new external force to fluid particles adjacent to the bubble 820. Based on the new external force $P_2$ acting on the fluid particles adjacent to the bubble 820, the modeling apparatus updates locations of the fluid particles using an SPH algorithm.

When the fluid particles move in response to the new external force $P_2$, a force estimated to be received by the fluid particles may be calculated using general physical equations with the knowledge of, for example, initial locations and updated locations of the fluid particles, and moving speeds of the fluid particles.

FIGS. 9A and 9B are diagrams illustrating examples of assigning a new ID based on a structural change of a bubble. A bubble included in a fluid may split into a plurality of small bubbles or a plurality of bubbles may merge into a single bubble due to a movement of the fluid or a collision of the fluid with an object.

FIG. 9A illustrates an example of a single bubble 910 splitting into two bubbles 920 and 930. Referring to FIG. 9A, the bubble 910 having an ID B splits into the bubbles 920 and 930. In the example in FIG. 9A, the modeling apparatus assigns an ID C to the bubble 920 and an ID D to the bubble 930.

Alternatively, the modeling apparatus may assign a new ID based on the ID B of the bubble 910 to indicate that the bubble 920 and the bubble 930 have split from the bubble 910. For example, the modeling apparatus may assign an ID B-1 to the bubble 920, and an ID B-2 to the bubble 930.

FIG. 9B illustrates an example of two bubbles 910 and 940 merging into a single new bubble 950. Referring to FIG. 9B, the bubble 910 having an ID B and the bubble 940 having an ID E merge into the bubble 950. In the example in FIG. 9B, the modeling apparatus assigns a new ID F to the bubble 950.

When a structural change occurs due to merging or splitting of a bubble or a plurality of bubbles, a volume of the bubble undergoing the structural change also changes, and thus continuing to track a change in the volume of the original bubble or bubbles before the structural change is meaningless. Accordingly, the modeling apparatus begins tracking a change in a volume of a bubble to which a new ID is assigned.

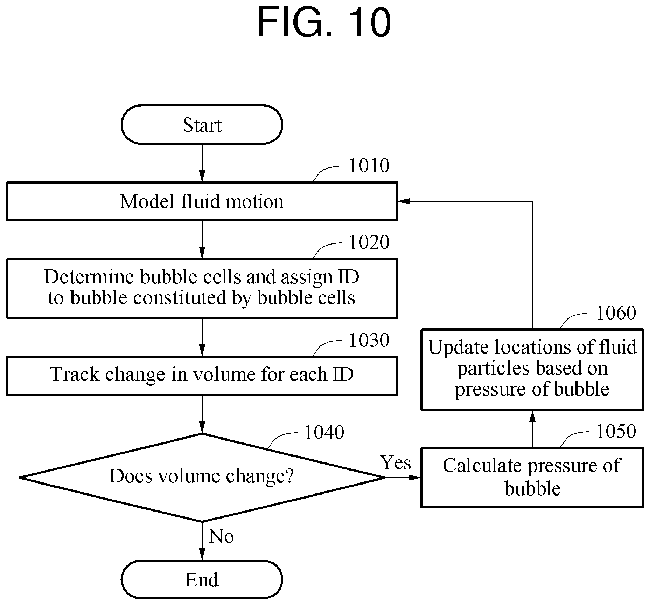

FIG. 10 is a flowchart illustrating another example of a fluid particle modeling method. Referring to FIG. 10, in operation 1010, a modeling apparatus models a fluid motion. For example, the modeling apparatus samples a fluid to obtain a plurality of fluid particles using a particle-based SPH algorithm, and determines locations of the fluid particles in each modeling time step by integrating an acceleration and a velocity of each fluid particle over time.

In operation 1020, the modeling apparatus determines bubble cells, and assigns an ID to a bubble constituted by the bubble cells. Since the locations of the fluid particles have been determined in operation 1010, the modeling apparatus determines locations of the fluid particles in a grid. The modeling apparatus determines grid cells that do not include any fluid particles to be bubble cells. The modeling apparatus defines the bubble by determining each bubble cell and a connection relationship among bubble cells adjacent to the bubble. The modeling apparatus assigns an ID to each bubble. The modeling apparatus maintains the ID assigned to the bubble while a modeling time step increases.

In operation 1030, the modeling apparatus tracks a change in a volume for each ID identifying a bubble. A bubble includes connected bubble cells having a same ID. Thus, a volume of the bubble is approximated by a sum of volumes of the bubble cells. When a volume of the bubble cells having the same ID changes, the modeling apparatus calculates a pressure based on an equation, for example, $PV = k$, that is effective to prevent the bubble cells from disappearing. When a structural change, for example, merging or splitting of bubbles, occurs, tracking a volume of a bubble prior to the occurrence of the structural change is meaningless. Thus, the modeling apparatus tracks a change in a volume for new ID corresponding to a bubble undergoing the structural change.

In operation 1040, the modeling apparatus determines whether the volume changes as a result of tracking a change in a volume for each ID. When the modeling apparatus determines that the volume does not change in operation 1040, the modeling apparatus terminates the process in FIG. 10.

In operation 1050, when the modeling apparatus determines that the volume changes in operation 1040, the modeling apparatus calculates a pressure of a bubble in which the volume changes. The modeling apparatus calculates the pressure of the bubble using a gas state equation based on the volume of the bubble. Under the assumption that a temperature of the bubble is constant, the pressure and the volume of the bubble are inversely proportional to each other as can be seen from Equation 3 above.

In operation 1060, the modeling apparatus updates the locations of the fluid particles based on the pressure of the bubble calculated in operation 1050. The modeling apparatus updates the locations of the fluid particles by applying the pressure of the bubble calculated in operation 1050 to fluid particles adjacent to the bubble.

In operation 1010, the modeling apparatus models the fluid motion based on the updated locations of the fluid particles.

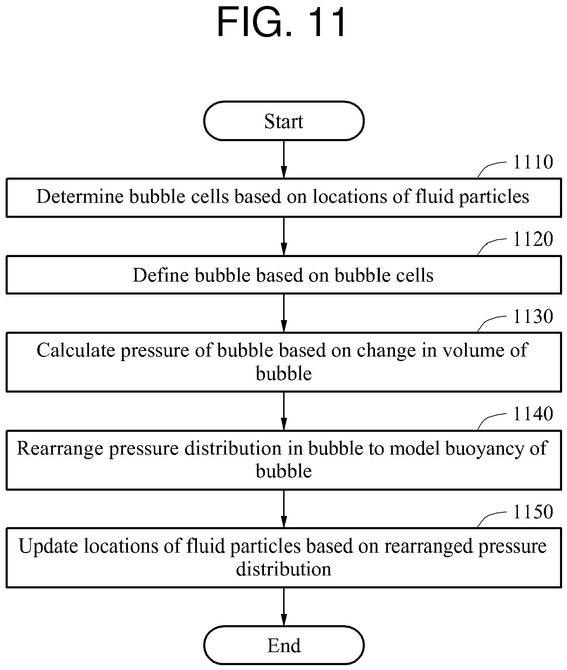

FIG. 11 is a flowchart illustrating another example of a fluid particle modeling method. For descriptions of operations 1110 through 1130 of FIG. 11, refer to the descriptions of operations 210 through 230 of FIG. 2.

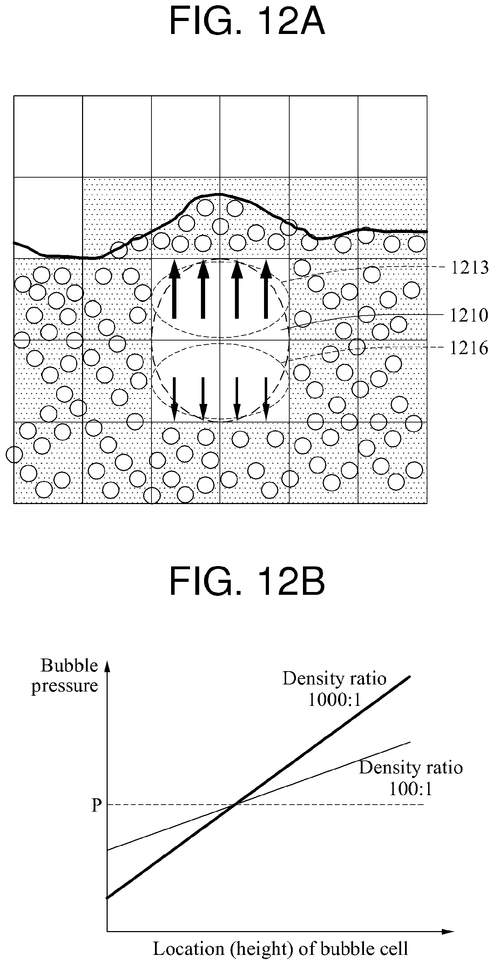

Referring to FIG. 11, in operation 1140, a modeling apparatus rearranges a pressure distribution in a bubble to model a buoyancy of the bubble. The modeling apparatus gradually changes the pressure distribution in the bubble based on locations of the bubble cells constituting the bubble. A location of a bubble cell may be construed to be a height from a reference level to the bubble cell in a modeling space. A process of rearranging a pressure distribution in a bubble performed by the modeling apparatus will be described in detail with reference to FIGS. 12A and 12B.

In operation 1150, the modeling apparatus updates locations of fluid particles based on the rearranged pressure distribution in the bubble. For example, the modeling apparatus calculates a buoyancy generated by the rearranged pressure distribution in the bubble. The modeling apparatus updates the locations of the fluid particles by applying the buoyancy as an external force to fluid particles adjacent to the bubble.

FIGS. 12A and 12B are diagrams illustrating an example of a process of rearranging a pressure distribution in a bubble to model a buoyancy of the bubble. FIG. 12A illustrates an example of a rearranged pressure distribution in a bubble 1210.

Referring to FIG. 12A, a modeling apparatus uses a gradation method that gradually changes the pressure distribution in the bubble 1210 to model the buoyancy of the bubble 1210. The modeling apparatus gradually changes the pressure distribution based on locations of bubble cells constituting the bubble 1210. For example, as illustrated in FIG. 12A, the modeling apparatus rearranges pressures that are identical in all directions as illustrated in FIG. 6 to model the buoyancy of the bubble 1210.

The buoyancy may be obtained using Equation 4 below.

$$\text{Buoyancy} = (\rho) \times (V) \times (g) \tag{4}$$

In Equation 4, p denotes fluid density, V denotes volume, and g denotes acceleration due to gravity.

The modeling apparatus rearranges the pressures by increasing a pressure of bubble cells 1213 at a higher location among the bubble cells constituting the bubble 1210, and decreasing a pressure of bubble cells 1216 at a lower location among the bubble cells constituting the bubble 1210 so that the pressure distribution in the bubble 1210 gradually changes.

FIG. 12B is a graph illustrating a correlation between a location, or a height, of a bubble cell and a pressure of a bubble. A bubble cell at a higher location among a plurality of bubble cells constituting a bubble has a relatively higher pressure, and a bubble cell at a lower location among the bubble cells constituting the bubble has a relatively lower pressure. A mean value of pressures of the bubble cells constituting the bubble is equal to a pressure calculated for the bubble.

Referring to the graph of FIG. 12B, when a density ratio is 1000:1, a change in a pressure based on a location or height of a bubble cell is large in comparison to a case when the density ratio is 100:1. The density ratio is a ratio between a fluid density and a bubble density. For bubbles of a same type, the density ratio increases as a fluid density increases. Thus, when the density ratio increases, the buoyancy of a bubble in a same volume also increases. When the buoyancy acting on the bubble increases, a change in a pressure based on locations of bubble cells in the bubble also increases.

Referring to FIGS. 12A and 12B, a pressure to be applied to fluid particles adjacent to a bubble, for example, the bubble 1210, is determined based on a direction of the buoyancy. For example, an external force corresponding to a sum of the pressure of the bubble 1210 and the buoyancy of the bubble 1210 is applied to fluid particles included in the bubble cells 1213 at an upper location, and an external force corresponding to a difference between the pressure of the bubble 1210 and the buoyancy of the bubble 1210 is applied to fluid particles included in the bubble cells 1216 at a lower location. In addition, an external force corresponding to the pressure of the bubble 1210 is applied to fluid particles included in cells on a right side and a left side of the bubble cells 1213 and 1216.

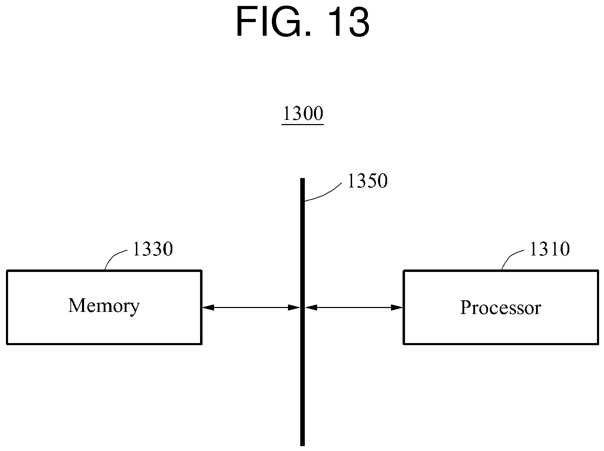

FIG. 13 is a diagram illustrating an example of a fluid particle modeling apparatus 1300.

Referring to FIG. 13, the fluid particle modeling apparatus 1300 includes a processor 1310 and a memory 1330.

The processor 1310 and the memory 1330 communicate with each other through a bus 1350.

The processor 1310 determines bubble cells based on locations of fluid particles, defines a bubble based on the bubble cells, calculates a pressure of the bubble based on a change in a volume of the bubble, and updates the locations of the fluid particles based on the pressure of the bubble calculated.

In a grid cell-based modeling space, the processor 1310 determines, to be the bubble cells, grid cells that do not include any fluid particles, The processor 1310 defines the bubble based on a connection relationship among the bubble cells, and assigns an ID to the bubble. The processor 1310 determines an initial volume and an initial pressure of the bubble based on information of a fluid cell adjacent to a location of the bubble. The processor 1310 calculates the pressure of the bubble based on a previous volume and a current volume of the bubble. The processor 1310 calculates a pressure effective to prevent the bubble from disappearing using a gas state equation.

In addition, the processor 1310 determines whether a structural change of the bubble occurs through ID matching in different modeling time steps, and assigns a new ID to the bubble in which the structural change occurs. The structural change of the bubble may include, for example, the bubble splitting into a plurality of bubbles and the bubble merging with another bubble.

The processor 1310 models the fluid particles using an SPH method. The processor 1310 determines updated locations of the fluid particles by applying the pressure of the bubble as an external force to fluid particles adjacent to the bubble.

The processor 1310 rearranges a pressure distribution in the bubble to model a buoyancy of the bubble. The processor 1310 gradually changes the pressure distribution based on a location of bubble cells constituting the bubble. The processor 1310 increases a pressure of bubble cells at a higher location among the bubble cells constituting the bubble, and decreases a pressure of bubble cells at a lower location among the bubble cells constituting the bubble.

In the grid cell-based modeling space, the memory 1330 stores information of fluid cells including fluid particles and information of bubble cells that do not include fluid particles. The memory 1330 may be a volatile memory or a nonvolatile memory.

The processor 1310 may perform any process or method described above with reference to FIGS. 1 through 12B. The processor 1310 may execute a program and control the fluid particle modeling apparatus 1300. Program instructions to be executed by the processor 1310 may be stored in the memory 1330. The fluid particle modeling apparatus 1300 may be connected to an external device, for example, a personal computer (PC) and a network, through an input or output device (not shown), and exchange data with the external device.

Any process or method described above with reference to FIGS. 1 through 12B may be implemented in a form of an application operating on hardware in, for example, a mobile device such as a mobile phone, a smartphone, a personal digital assistant (PDA), a tablet computer, or a laptop computer, a computing device such as a PC, a tablet computer, or a netbook, and other various electronic systems such as a television (TV), a smart TV, a virtual reality (VR) providing device, and a game console or machine, or may be embedded therein in a form of a chip for performing the process or method.

The fluid particle modeling apparatus 1300, the processor 1310, and the memory 1330 illustrated in FIG. 13 that perform the operations described herein with respect to FIGS. 1A-13 are implemented by hardware components. Examples of hardware components include controllers, sensors, generators, drivers, memories, comparators, arithmetic logic units, adders, subtractors, multipliers, dividers, integrators, and any other electronic components known to one of ordinary skill in the art. In one example, the hardware components are implemented by computing hardware, for example, by one or more processors or computers. A processor or computer is implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices known to one of ordinary skill in the art that is capable of responding to and executing instructions in a defined manner to achieve a desired result. In one example, a processor or computer includes, or is connected to, one or more memories storing instructions or software that are executed by the processor or computer. Hardware components implemented by a processor or computer execute instructions or software, such as an operating system (OS) and one or more software applications that run on the OS, to perform the operations described herein with respect to FIGS. 1A-13. The hardware components also access, manipulate, process, create, and store data in response to execution of the instructions or software. For simplicity, the singular term "processor" or "computer" may be used in the description of the examples described herein, but in other examples multiple processors or computers are used, or a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 2, 3, 5, 7, 10, and 11 that perform the operations described herein with respect to FIGS. 1A-13 are performed by computing hardware, for example, by one or more processors or computers, as described above executing instructions or software to perform the operations described herein.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any device known to one of ordinary skill in the art that is capable of storing the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the processor or computer.

While this disclosure includes specific examples, it will be apparent to one of ordinary skill in the art that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

**Claims**

1. A fluid particle modeling method comprising:

    determining bubble cells based on locations of fluid particles;
    defining a bubble constituted by the bubble cells;
    calculating a pressure of the bubble based on a change in a volume of the bubble; and
    updating the locations of the fluid particles based on the pressure of the bubble.

2. The method of claim 1, wherein the determining of the bubble cells comprises determining grid cells not comprising any of the fluid particles among grid cells in a grid cell-based modeling space to be the bubble cells.

3. The method of claim 1 or 2, wherein the defining of the bubble comprises:

    determining the bubble based on a connection relationship among the bubble cells; and
    assigning an identifier (ID) to the bubble.

4. The method of claim 3, wherein the determining of the bubble comprises:

    determining the connection relationship among the bubble cells using a flood-fill labeling algorithm; and
    determining connected bubble cells among the bubble cells to be the bubble.

**5.** The method of any of the foregoing claims, further comprising determining an initial volume and an initial pressure of the bubble based on information of a fluid cell adjacent to a location of the bubble;
wherein the fluid cell comprises some of the fluid particles.

**6.** The method of any of the foregoing claims, wherein the calculating of the pressure of the bubble comprises calculating the pressure of the bubble based on a previous volume of the bubble and a current volume of the bubble.

**7.** The method of any of the foregoing claims, wherein the calculating of the pressure of the bubble comprises calculating a pressure of the bubble effective to prevent the bubble from disappearing using a gas state equation.

**8.** The method of any of the foregoing claims, further comprising:

determining whether a structural change of the bubble has occurred by performing ID matching in different modeling time steps; and
assigning a new ID to one or more bubbles resulting from the structural change in response to a result of the determining being that the structural change has occurred.

**9.** The method of claim 8, wherein:

the determining of whether the structural change of the bubble has occurred comprises performing the ID matching in the different modeling time steps using a best overlapping algorithm; and/or
wherein the structural change of the bubble is either one of the bubble splitting into a plurality of bubbles and the bubble merging with another bubble.

**10.** The method of any of the foregoing claims, wherein the updating of the locations of the fluid particles comprises modeling the fluid particles using a smoothed-particle hydrodynamics (SPH) algorithm.

**11.** The method of any of the foregoing claims, wherein the updating of the locations of the fluid particles comprises:

applying the pressure of the bubble as an external force to fluid particles adjacent to the bubble among the fluid particles; and
determining updated locations of the fluid particles based on the external force applied to the fluid particles adjacent to the bubble.

**12.** The method of any of the foregoing claims, wherein the calculating of the pressure of the bubble comprises rearranging a pressure distribution in the bubble to model a buoyancy of the bubble.

**13.** The method of claim 12, wherein:

the rearranging of the pressure distribution in the bubble comprises gradually changing the pressure distribution in the bubble based on locations of the bubble cells constituting the bubble; and/or
wherein the rearranging of the pressure distribution in the bubble comprises:

increasing pressures of bubble cells at higher locations in the bubble among the bubble cells constituting the bubble; and
decreasing pressures of bubble cells at lower locations in the bubble among the bubble cells constituting the bubble.

**14.** A non-transitory computer-readable storage medium storing instructions that, when executed by a processor, cause the processor to perform the method of any of the foregoing claims 1-13.

**15.** A fluid particle modeling apparatus comprising:

a processor configured to perform any of the steps of any of claims 1-13; and
a memory configured to store information of fluid cells comprising the fluid particles and information of the bubble cells constituting the bubble in a grid cell-based modeling space.

# FIG. 1A

# FIG. 1B

# FIG. 2

```
            ┌───────────┐
            │   Start    │
            └───────────┘
                  │
                  ▼                              ⌐210
┌────────────────────────────────────────────────────┐
│  Determine bubble cells based on locations of fluid particles │
└────────────────────────────────────────────────────┘
                  │
                  ▼                              ⌐220
┌────────────────────────────────────────────────────┐
│          Define bubble based on bubble cells          │
└────────────────────────────────────────────────────┘
                  │
                  ▼                              ⌐230
┌────────────────────────────────────────────────────┐
│  Calculate pressure of bubble based on change in volume of bubble │
└────────────────────────────────────────────────────┘
                  │
                  ▼                              ⌐240
┌────────────────────────────────────────────────────┐
│  Update locations of fluid particles based on pressure of bubble │
└────────────────────────────────────────────────────┘
                  │
                  ▼
            ┌───────────┐
            │    End     │
            └───────────┘
```

# FIG. 3

```
          ┌─────────────┐
          │    Start    │
          └─────────────┘
                 │
                 ▼                                    ⌐ 310
 ┌────────────────────────────────────────────────────┐
 │  Determine connection relationship among bubble cells │
 └────────────────────────────────────────────────────┘
                 │
                 ▼                                    ⌐ 320
 ┌────────────────────────────────────────────────────┐
 │  Determine connected bubble cells to be single bubble │
 └────────────────────────────────────────────────────┘
                 │
                 ▼                                    ⌐ 330
 ┌────────────────────────────────────────────────────┐
 │               Assign ID to bubble                   │
 └────────────────────────────────────────────────────┘
                 │
                 ▼
          ┌─────────────┐
          │     End     │
          └─────────────┘
```

# FIG. 4

Bubble cell
455

Bubble cell
435

450

410

Fluid cell
415

430

# FIG. 5

```
                    ┌──────────────┐
                    │    Start     │
                    └──────┬───────┘
                           │                        ┌─ 510
┌──────────────────────────┴──────────────────────────────┐
│  Determine initial volume and initial pressure of bubble based on │
│    information of fluid cell adjacent to location of bubble        │
└──────────────────────────┬──────────────────────────────┘
                           │                        ┌─ 520
┌──────────────────────────┴──────────────────────────────┐
│   Calculate pressure of bubble effective to prevent bubble from   │
│          disappearing using gas state equation                    │
└──────────────────────────┬──────────────────────────────┘
                           │
                    ┌──────┴───────┐
                    │     End      │
                    └──────────────┘
```

# FIG. 6

# FIG. 7

Start

Determine bubble cells based on
locations of fluid particles ⟋ 710

Determine bubble based on connection
relationship among bubble cells ⟋ 720

Assign ID to bubble ⟋ 730

Calculate pressure of bubble based on previous
volume and current volume of bubble ⟋ 740

Determine updated locations of fluid particles
by applying pressure of bubble as external
force to fluid particles adjacent to bubble ⟋ 750

Does structural
change occur? ⟋ 760

Yes → Assign new ID to bubble
in which structural
change occurs ⟋ 770

No

End

# FIG. 8

# FIG. 9A

910

920

Bubble
B

Bubble
C

Bubble
D

930

# FIG. 9B

910

Bubble
B

Bubble
E

940

Bubble
F

950

# FIG. 10

```
          ┌──────────────┐
          │    Start     │
          └──────┬───────┘
                 │
                 ▼                          ┌─ 1010
   ┌─────────────────────────────┐
   │      Model fluid motion      │◄──────────────────────┐
   └─────────────┬───────────────┘                        │
                 │                          ┌─ 1020        │
   ┌─────────────▼───────────────┐                        │
   │ Determine bubble cells and assign ID                 │
   │ to bubble constituted by bubble cells                │
   └─────────────┬───────────────┘                        │
                 │                          ┌─ 1030        │
   ┌─────────────▼───────────────┐          ┌─ 1060        │
   │ Track change in volume for each ID     │ Update locations of fluid
   └─────────────┬───────────────┘          │ particles based on
                 │                          │ pressure of bubble
                 │                          └───────▲──────┘
                 │          ┌─ 1040                 │
          ┌──────▼──────────┐        Yes   ┌─ 1050  │
          │ Does volume change? ├─────────►│ Calculate pressure of
          └──────┬──────────┘              │        bubble
                 │ No
          ┌──────▼───────┐
          │     End      │
          └──────────────┘
```

# FIG. 11

```
                    ┌─────────────┐
                    │    Start    │
                    └─────────────┘
                           │              ┌─ 1110
                           ▼
┌──────────────────────────────────────────────────┐
│  Determine bubble cells based on locations of fluid particles │
└──────────────────────────────────────────────────┘
                           │              ┌─ 1120
                           ▼
┌──────────────────────────────────────────────────┐
│           Define bubble based on bubble cells              │
└──────────────────────────────────────────────────┘
                           │              ┌─ 1130
                           ▼
┌──────────────────────────────────────────────────┐
│  Calculate pressure of bubble based on change in volume of │
│                        bubble                              │
└──────────────────────────────────────────────────┘
                           │              ┌─ 1140
                           ▼
┌──────────────────────────────────────────────────┐
│  Rearrange pressure distribution in bubble to model buoyancy of │
│                        bubble                              │
└──────────────────────────────────────────────────┘
                           │              ┌─ 1150
                           ▼
┌──────────────────────────────────────────────────┐
│  Update locations of fluid particles based on rearranged pressure │
│                    distribution                           │
└──────────────────────────────────────────────────┘
                           │
                           ▼
                    ┌─────────────┐
                    │     End     │
                    └─────────────┘
```

# FIG. 12A

---- 1213

---- 1210

---- 1216

# FIG. 12B

Bubble pressure

Density ratio 1000:1

Density ratio 100:1

P

Location (height) of bubble cell

# FIG. 13

1300

1350

1330

1310

Memory

Processor

Europäisches
Patentamt

European
Patent Office

Office européen
des brevets

# EUROPEAN SEARCH REPORT

Application Number

EP 16 20 2849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SEUNGTAIK OH ET AL: "Single-Phase Trapped Air Simulation in Water Flow", WSCG 2014 CONFERENCE ON COMPUTER GRAPHICS, VISUALIZATION AND COMPUTER VISION, 1 June 2014 (2014-06-01), XP055350572, ISBN: 978-80-86-94374-9 sections 3.2, 3.4; * abstract * * the whole document * | 1-15 | INV. G06F17/50 G06T13/60 |
| Y | DANIELA ANDERL ET AL: "Free surface lattice Boltzmann with enhanced bubble model", COMPUTERS & MATHEMATICS WITH APPLICATIONS, vol. 67, no. 2, 2 February 2014 (2014-02-02), pages 331-339, XP055350586, AMSTERDAM, NL ISSN: 0898-1221, DOI: 10.1016/j.camwa.2013.06.007 sections 1; 2.3; * abstract; figure 1 * * equation 13 * * the whole document * | 1-15 | |
| A | JEONG-MO HONG ET AL: "Bubbles alive", ACM SIGGRAPH 2008 PAPERS ON, SIGGRAPH '08, ACM PRESS, NEW YORK, NEW YORK, USA, 1 August 2008 (2008-08-01), pages 1-4, XP058092079, DOI: 10.1145/1399504.1360647 ISBN: 978-1-4503-0112-1 equation 1; sections 3; 3.1; 3.2; * abstract; figure 2 * * the whole document * | 1-15 | |

TECHNICAL FIELDS
SEARCHED (IPC)

G06F
G06T

-/--

The present search report has been drawn up for all claims

| Place of search | Date of completion of the search | Examiner |
|---|---|---|
| Munich | 23 March 2017 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 20 2849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LOSASSO F ET AL: "Two-Way Coupled SPH and Particle Level Set Fluid Simulation", IEEE TRANSACTIONS ON VISUALIZATION AND COMPUTER GRAPHICS, IEEE SERVICE CENTER, LOS ALAMITOS, CA, US, vol. 14, no. 4, 1 July 2008 (2008-07-01), pages 797-804, XP011344503, ISSN: 1077-2626, DOI: 10.1109/TVCG.2008.37 Section VI; * abstract * * the whole document * | 1-15 | |
| A | US 2007/043544 A1 (SONG OH-YOUNG [KR] ET AL) 22 February 2007 (2007-02-22) * the whole document * | 1-15 | |

TECHNICAL FIELDS
SEARCHED       (IPC)

The present search report has been drawn up for all claims

| Place of search | Date of completion of the search | Examiner |
|---|---|---|
| Munich | 23 March 2017 | Dapp, Wolfgang |

EPO FORM 1503 03.82 (P04C01)

page 2 of 2

## ANNEX TO THE EUROPEAN SEARCH REPORT
## ON EUROPEAN PATENT APPLICATION NO.

EP 16 20 2849

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2017

| Patent document cited in search report | Publication date | Patent family member(s) | Publication date |
|---|---|---|---|
| US 2007043544 A1 | 22-02-2007 | NONE | |

EPO FORM P0459